# EUROPEAN PATENT APPLICATION

(11) **EP 3 023 010 A1**
(43) Date of publication of application: **25.05.2016**
(21) Application number: 15195444.3
(22) Date of filing: 19.11.2015
(51) Int. Cl.: A23L 13/50, A23L 17/00, A23L 13/00, A23L 19/00, A23L 29/256, A23L 29/262, A23L 29/269, A23L 29/238, A23L 29/212

(54) **STABILISED FOOD PRODUCTS**

(30) Priority: 19.11.2014 EP 14193947
(71) Applicant: Crisp Sensation Holding S.A., 1208 Geneva (CH)
(72) Inventor: Michiels, Wilhelmus Johannes Gerardus, 6031 GB Nederweert (NL); van der Kolk, Bianca, 5212 BL 's-Hertogenbosch (NL)
(74) Representative: Browne, Robin Forsythe

(57) **Abstract**

A stabiliser composition comprising, calculated by weight of dry matter:
cellulose gum 5-25 wt.%
modified starch 10-50 wt.%
maltodextrin 10-55 wt.%
polydextrose 0-45 wt.%
protein 0-20 wt.%
hydrocolloid 1-10 wt.%
other ingredients 0-30 wt.%.

## Description

This invention relates to a composition for stabilising a food product to prevent moisture loss during heating, particularly from the core of a coated product or the filling of a product comprising an outer layer surrounding a fluid or semi-solid filling. The invention relates particularly to stabilisation of food products which are heated in a conventional oven or grill. The invention also relates to a method of stabilising a food product and products stabilised according to the method.

WO97/03572 discloses a method of stabilising a microwave cookable or reheatable food material by impregnation of the product with a stabiliser composition comprising cellulose gum, modified starch, polydextrose, xanthan gum, egg albumen and pea starch.

EP 2359697 and EP 2374361 disclose improved methods of manufacture of stabilised food products which may be fried, frozen and subsequently reheated in a microwave oven. The requirements for stabilisation of microwaveable food products are exacting because microwave radiation heats water contained in the interior of the product, causing a release of steam which can impair the integrity of the coating layers or cause leakage of a filling. In order to overcome these problems a stabiliser has been added to the core substrate or to the filling. This stabiliser comprises cellulose gum (Methocel A4M), modified starch (Thermflo), polydextrose, xanthan gum and egg albumen.

The stabiliser compositions described in the aforementioned patent publications were designed for use in microwaveable food products. Although they may be used in food products that are normally cooked or reheated in thermal ovens, these stabiliser compositions do not produce optimal results in this type of food products. Consequently, there is a need for a stabiliser composition that enables preparation of food products that can suitably be cooked or reheated in a conventional oven or grill, and preferably also in a microwave.

The inventors have developed a stabiliser composition that meets the aforementioned requirements.

According to a first aspect of the invention, a stabiliser composition comprising, calculated by weight of dry matter:

| | |
|---|---|
| cellulose gum | 5-25 wt.% |
| modified starch | 10-50 wt.% |
| maltodextrin | 10-55 wt.% |
| polydextrose | 0-45 wt.% |
| protein | 0-20 wt.% |
| hydrocolloid | 1-10 wt.% |
| other ingredients | 0-30 wt.% |
| Total | 100 wt% |

According to a second aspect of the invention a method of manufacture of a microwave or thermally cookable or reheatable food product; the method comprising the steps of: providing a substrate comprising pieces of poultry, fish, red meat, vegetable, fruit and/or dairy food; impregnating the substrate with a stabiliser composition to produce a stabilised substrate; applying an aqueous coating composition onto the stabilised substrate to produce a coated substrate; and applying a coating of fine crumb onto the coated substrate to form a crumbed substrate comprising a layer of fine crumb encasing the coated substrate.

According to a third aspect of the invention a stabilised food product comprising: a base food substrate chosen from the group consisting of a meat substrate; a sauce; a fruit; a vegetable; a fish; and a pastry; and an aqueous stabiliser composition on an exterior surface of the base food substrate or within the base food substrate; wherein the aqueous stabiliser composition includes: from about 5 to 25 wt.% of a cellulose gum; from about 10 to about 50 wt.% of at least one modified starch; from about 10 to about 55 wt.% maltodextrin; polydextrose; a protein; a hydrocolloid where all amounts are calculated by weight of dry matter.

The composition includes a dextrose component which consists of maltodextrin with optional polydextrose.

All percentages mentioned herein, unless indicated otherwise, are to be construed as percentages by weight and the amounts of the ingredients are selected from any ranges of percentages quoted to total 100%.

The stabiliser composition preferably contains 2% to 55% maltodextrin by weight of dry matter, more preferably 20% to 55%, even more preferably 20% to 40% maltodextrin by weight of dry matter and most preferably 25% to 28% maltodextrin by weight of dry matter.

The polydextrose content of the stabiliser composition preferably is 0% to 45% calculated by weight of dry matter, more preferably 6% to 30% by weight of dry matter and most preferably 12% to 15% by weight of dry matter.

The maltodextrin preferably has a dextrose equivalent (DE) value between 3 and 20, preferably in the range of 8 to 20. A DE value in the range of 10 to 15 may be used. The DE value is a measure of the reducing power compared to a standard of 100 for dextrose.

Even more preferably maltodextrin has a dextrose equivalent (DE) in the range of 10 to 20 and is produced by enzymatic hydrolysis and not using heat.

Maltodextrin having a relatively high DE value may be preferred to give the following properties. Browning during cooking may be reduced. Solubility may be reduced and a reduced viscosity may be obtained. A lower DE value may be used to advantageously give increased film forming and cohesive properties.

Spray dried maltodextrin may be employed to give increased porosity resulting in improved absorption of other sensitive ingredients of the stabiliser or ancillary components for example to protect flavours or colours of the composition.

Use of maltodextrin may serve to improve absorption of oils which may penetrate the coating layers during frying, other cooking or reheating.

Maltodextrin derived from rice or corn may be employed. Rice maltodextrin when used may have a protein content of about 3%. Rice maltodextrin is advantageous in some applications because it may give a creamy texture to the overall product.

The combined amount of maltodextrin and polydextrose in the stabiliser composition preferably constitutes about 30% to about 55wt% of the stabiliser composition, more preferably 20% to 50wt% by weight of dry matter of the stabiliser composition, most preferably 25% to 45wt% of the stabiliser composition,

Mixtures of maltodextrin and polydextrose which find particular application may have a ratio of maltodextrin:polydextrose in the range about 5:1 to about 1:5 by weight, preferably in the range of about 3:1 to about 1:2, most preferably about 1:1.

Microwaveable products may be fried in oil at 180 to 185°C for 2.5 minutes to ensure that the substrate is fully cooked and that all moisture is driven from the coating. In order to reduce the size of ice crystals formed in the coating layer, the fried products may be frozen in a cryogenic freezer operating at -60°C to -70°C until the core temperature is -25°C to -30°C.

In contrast, an ovenable product of the present invention may only need to be fried for 2 minutes at 180 to 185°C to ensure a crisp and moisture free coating after cooking of the substrate in a conventional oven. Less severe freezing is necessary, for example using a freezer operating at -40°C to give a core temperature of -15°C to -20°C because absence of formation of ice crystals in the surface layer is less critical.

The formulation of the present invention confers several advantages. The succulence and moisture content of the substrate is retained to a greater extent. This is particularly beneficial with meat such as chicken or with sauces. Loss of water is minimised as the structure of the protein matrix is protected from excessive denaturation as may occur when subjected to microwave or thermal heating. This enables the water holding capacity of the substrate to be retained during production.

Development of ice crystals during cryogenic freezing of a fried product and on subsequent storage may be substantially reduced. The presence of ice crystals can destroy the protein matrix leading to loss of water and succulence. The water holding capacity of the substrate during storage is impaired. This can lead to moisture migration on storage, resulting in a soggy coating with a loss of crispness of the coating layers. This in turn gives an inferior mouthfeel and taste.

The composition serves to protect the substrate, for example chicken meat or sauce, during reheating in a microwave or thermal oven, without forming an irreversible or permanently solid component of the food product. Movement of water into the coating layers is reduced or prevented and the meat or sauce is maintained in an optimum textural condition.

Use of maltodextrin is particularly beneficial in sauce compositions for filled products because it does not act as a thickening agent.

The amount of modified starch in the stabiliser composition is preferably from about 12% to about 40%, more preferably from about 14% to about 35%, most preferably from about 15% to about 30%.

The protein is preferably selected from the group consisting of: egg albumen, whey protein, soy protein and mixtures thereof. Use of egg albumen is preferred.

In alternative compositions no egg albumen or other egg products are present. Where present the protein may be contained in the stabiliser composition in an amount of about 1-20% by weight of dry matter.

Suitable hydrocolloids comprise natural gums, and may be selected from the group consisting of: xanthan gum, carrageenan gum, guar gum and mixtures thereof. Use of xanthan gum, guar gum or mixtures thereof is particularly preferred Use of xanthan gum or a mixture of hydrocolloids containing xanthan gum is especially preferred. An alternative preferred hydrocolloid is carrageenan gum, preferably a mixture of kappa and iota carrageenan gums. An amount of the hydrocolloid of about 3% to about 10% by weight of dry matter, particularly about 6% by weight of dry matter is preferred. Preferably gelatin is not used in compositions of this invention.

The cellulose gum and modified starch may be considered to act as a thermal gelation component. Without wishing to be bound by theory it is believed that the gelation component may serve to form a reversibly thermosetting gel during heating preventing loss of water from the substrate.

In a preferred embodiment the stabiliser composition comprises, calculated by weight of dry matter:

| | |
|---|---|
| cellulose gum | 5-25% |
| modified starch | 16-35% |
| maltodextrin | 16-.35% |
| polydextrose | 5-25% |
| hydrocolloid | 1-10% |
| egg albumen | 1-20% |
| other ingredients | 0-25%; |

wherein the percentages of the ingredients are selected from the ranges quoted to total 100%.

A particularly preferred stabiliser composition comprises, calculated by weight of dry matter:

| | |
|---|---|
| cellulose gum | 10-20% |
| modified starch | 20-30% |
| maltodextrin | 20-30% |
| polydextrose | 10-20% |
| hydrocolloid | 3-10% |
| egg albumen | 3-18% |
| other ingredients | 0-15%. |

The preferred hydrocolloid is xanthan gum or a mixture of hydrocolloids containing xanthan gum.

An especially preferred stabiliser composition comprises, calculated by weight of dry matter:

| Ingredient | % |
|---|---|
| cellulose gum | 15.0 |
| modified starch | 24.0 |
| maltodextrin | 26.0 |
| polydextrose | 14.0 |
| xanthan gum | 6.0 |
| egg albumen | 15.0 |
| Total | 100.0 |

The stabiliser composition preferably is an aqueous fluid with a dry matter content of about 0.1% to about 10%, preferably 1% to about 8%, more preferably about 3% to about 5%.

Preferred cellulose gums may be selected from the group consisting of: methyl cellulose, hydroxypropyl methyl cellulose, carboxymethyl cellulose and combinations thereof. Methyl cellulose or cellulose ethers particularly as sold under the trade mark METHOCEL A15 or A4M or a mixture thereof are especially preferred. Use of METHOCEL A15 is advantageous, having a lower viscosity than A4M, resulting in improved rates and efficiency of impregnation of the stabiliser into the substrate. An amount of about 10-20% by weight of dry matter, preferably about 15% by weight of matter may suitably be employed in the stabiliser composition.

Modified starches which may be employed comprise partially degraded starch which has been modified, for example by heating or acetylation. Hydroxyalkylated starch for example hydroxypropylated starch may be employed. A suitable modified starch is manufactured under the trade mark THERMFLO. An amount of about 20% to about 30% by weight of dry matter, preferably about 24% by weight of dry matter is preferred.

Suitable hydrocolloids for use in the gel composition may be selected from the group consisting of: xanthan gum, carrageenan gum, guar gum and mixtures thereof. Use of xanthan gum, guar gum or mixtures thereof is particularly preferred Use of xanthan gum or a mixture of hydrocolloids containing xanthan gum is especially preferred. An amount of about 5% to 7% by weight of dry matter, particularly about 6% by weight of dry matter may be employed.

Further ingredients may be used as necessary. For example flavourings, preservatives or colourants may be added.

According to a further aspect of this invention a microwave or thermally cookable or reheatable food product comprises a substrate comprising pieces of poultry, fish, red meat, vegetable, dairy or processed foods;
the substrate being impregnated with a stabiliser composition comprising, calculated by weight of dry matter:

| | |
|---|---|
| cellulose gum | 5-25 wt.% |
| modified starch | 10-50 wt.% |
| maltodextrin | 10-55 wt.% |
| polydextrose | 0-45 wt.% |
| protein | 0-20 wt.% |
| hydrocolloid | 1-10 wt.% |
| other ingredients | 0-30 wt.% |

The food product may further comprise an aqueous coating applied to the impregnated substrate;
wherein the aqueous coating comprises water and 0.1 to 5% by dry weight of:

| | |
|---|---|
| cellulose gum | 15-35% |
| modified starch | 15-35% |
| hydrocolloid | 20-30% |
| proteinaceous component | 10-20%; |

a first coating of fine crumb applied to the aqueous coating to form a layer of fine crumb encasing the substrate;
an optional batter composition applied to the first coating to form a batter coating; and
an optional layer of outer crumb applied to the batter coating.

In the second aspect of the present invention the present invention there is provided a method of manufacture of a thermally cookable or reheatable food product, the method comprising the steps of:
providing a substrate comprising pieces of poultry, fish, red meat, vegetable, fruit and/or dairy food;
impregnating the substrate with a stabiliser composition as defined herein before to produce a stabilised substrate;
applying an aqueous coating composition onto the stabilised substrate to produce a coated substrate; and
applying a coating of fine crumb onto the coated substrate to form a crumbed product comprising a layer of fine crumb encasing the coated substrate.

In an advantageous method the maltodextrin may be mixed with the hydrocolloid before adding to other ingredients in order to improve dispersion and wetting without clumping, so that wetting of the hydrocolloid is improved.

In the present method the substrate may be impregnated with the stabiliser composition by applying the stabiliser composition onto the substrate, by immersing the substrate into the stabiliser composition or by injecting the stabiliser composition into the substrate. According to a particularly preferred embodiment, the stabiliser composition is applied by means of vacuum impregnation or injection.

According to a particularly preferred embodiment, the present method further comprises pre-frying of the crumb coated substrate, optionally after application of further coating layers, and freezing of the pre-fried substrate.

The pre-fried substrate may not be cryogenically frozen after pre-frying the crumbed substrate.

The aqueous coating composition may be a viscous aqueous solution, may be thixotropic, or may be a gel which forms a solid or semi-solid consistency when not subjected to shear. The aqueous coating is preferably a free flowing viscous fluid or gel. It is referred in this specification as a "gel" or "aqueous coating" for convenience.

The aqueous coating composition preferably comprises water and about 0.1 wt.% to about 5 wt.% dry matter, said dry matter comprising:

| | |
|---|---|
| cellulose gum | 15-35% |
| modified starch | 15-50% |
| hydrocolloid | 20-30% |
| protein | 10-20% |

The preferred hydrocolloid in the aqueous coating composition is xanthan gum or a mixture of hydrocolloids containing xanthan gum.

The protein is preferably selected from the group consisting of: egg albumen, whey protein, soy protein and mixtures thereof. Use of egg albumen is preferred.

The aqueous coating composition preferably is a viscous solution or a gel with a dry matter content of about 0.1% to 5%, preferably about 0.3% to 3%, more preferably about 1%.

A particularly preferred aqueous coating composition comprises, calculated by weight of dry matter:

| | |
|---|---|
| cellulose gum | 20-30% |
| modified starch | 20-40% |
| hydrocolloid | 20-40% |
| egg albumen | 10-30% |

An especially preferred aqueous coating composition comprises, calculated by dry matter:

| Ingredient | % |
|---|---|
| cellulose gum | 25.0 |
| modified starch | 35.0 |
| xanthan gum | 25.0 |
| egg albumen | 15.0 |
| Total | 100.0 |

The aqueous coating composition exhibits good adhesion to the impregnated substrate. Adhesion of subsequently applied crumb or other fine particles is facilitated. The aqueous coating or gel coating also serves as an additional barrier to loss of moisture from the substrate during the subsequent microwave heating stage. Without wishing to be bound by theory it is believed that the gel coating composition absorbs moisture escaping from the core and also serves as a barrier to fat pickup by the core, avoiding impairment of the flavour of the core and helping to provide a low fat product. Impregnation of the core with an aqueous solution of the stabiliser contributes to the moisture content of the core during cooking or reheating.

In a first preferred embodiment of the invention a first coating of fine crumb is applied to the coated substrate.

Advantageously the fine crumb may have a particle size of about 0.1 to about 1mm, preferably about 0.25mm to about 0.9mm. Smaller particles for example crumb dust may be used. A 1mm mesh sieve may be used to screen larger particles from the fines. The fine crumb may comprise fines resultant from milling during manufacture of crumb used for the exterior coating of a food product.

Untreated fines may be used, for example pin head rusk. However use of pin head rusk may not be preferred for certain applications due to a tendency to form a moist or slimy coating caused by picking up of water from contact with the aqueous coating or gel or from a batter composition applied to the fine crumb layer.

In advantageous embodiments of this invention crumb fines incorporating a hydrocolloid are employed. The hydrocolloid may be selected from guar gum, xanthan gum or mixtures thereof. Use of a hydrocolloid may provide a degree of water resistance to the fines reducing any tendency to pick up moisture from adjacent gel or batter layers. Use of fines resulting from the process for manufacture of crumb as disclosed in WO 2010/001101 is especially preferred. Gelatin or starches may not be employed as the hydrocolloid.

Application of a first coating of crumb fines may be difficult without use of an aqueous coating or gel applied as a pre-coat as disclosed above since the fines will not adhere sufficiently to a dry substrate, in contrast to a conventional pre-dust. Use of the aqueous coating or gel coating has the additional advantage that the fines layer may adhere to the substrate providing a complete covering or shell surrounding the stabilised substrate to reduce the escape of water vapour or ingress of fat during frying. Application of the aqueous coating or gel allows formation of a complete coating on the substrate allowing adhesion of the first fine crumb to the entire surface forming an integral shell of the fine crumb.

The first crumb coating may be applied using a first crumb applicator, the crumb being applied in excess with the surplus shaken off.

A loading of the crumb layer may be about 5-10% of the weight of the stabilised substrate, dependent on the size of the substrate particles and other factors.

Following application of the first crumb, a coating of batter may be applied by immersion using a tempura applicator or other convenient apparatus. Following application of the batter layer a second outer crumb coating may be applied. Preferably two outer coatings of crumb are applied, the first coating being of larger particles followed by a further coating of smaller particles to fill any gaps between the larger particles.

In a second preferred embodiment a further coating of the aqueous coating composition is applied to the fine crumb instead of a batter layer. The outer crumb layer, when used may be applied to the batter coating or second aqueous coating to form a crumb coated food product.

In a preferred embodiment a first outer crumb coating comprises particles having a size of 1-3mm preferably about 2mm or larger as appropriate. The crumb may be applied in excess using a crumb applicator with surplus shaken off. The crumb coated substrate may be passed through a roller to improve adhesion.

A second outer coating of smaller particles of crumb for example having a size from about 0.2 to about 2mm and preferably about 0.5 to about 1mm may be applied dependent on the size of the substrate and the dimensions of the first outer crumb. Use of two crumb layers forms an integral coating without the batter layer being visible. A roller may be used to improve adhesion of the second crumb coating.

A method of stabilisation and stabiliser compositions in accordance with this invention may be used for coated products such as crumbed or pastry enrobed products. In addition the composition may be used for uncoated products including cooked meat, for example sausages and fish. Vegetables and fruit may also be stabilised.

The method may include the step of applying a first and optionally a second or further batter coating to the impregnated coated substrate.

A batter coating may be applied to the substrate. A suitable batter coating is disclosed in EP-A-2356911 or WO 2012/175930, the disclosures of which are incorporated into this specification by reference for all purposes. Alternatively a coating as disclosed in WO96/32026 may be used.

A crumb coating may be applied to the batter coating. A preferred crumb coating is disclosed in WO 2010/001101, the disclosure of which is incorporated in to the present specification for all purposes by reference.

The battered and/or crumb coated product may be fried and then frozen for storage prior to use.

The coated product, whether frozen, chilled or fresh, may be reheated or cooked before use using a conventional oven or grill, by shallow or deep fry, or using an air fryer.

The pieces of the substrate may be whole portions, for example whole muscle portions such as individual steaks or fillets or larger pieces which may be cut into individual portions after cooking or reheating. Alternatively the pieces may comprise chopped or comminuted pieces, for example, nuggets or minced products which may be reformulated into larger portions.

In the third aspect of the present invention the stabilised food product comprises:
a base food substrate chosen from the group consisting of a meat substrate; a sauce; a fruit; a vegetable; a fish; and a pastry; and
an aqueous stabiliser composition on an exterior surface of the base food substrate or within the base food substrate; and
wherein the aqueous stabiliser composition includes: from about 5 to 25 wt.% of a cellulose gum; from about 10 to about 50 wt.% of at least one modified starch; from about 10 to about 55 wt.% maltodextrin; polydextrose; a protein; a hydrocolloid where all amounts are calculated by weight of dry matter.

The stabilised food product may have the stabiliser composition on the exterior surface of the base food substrate, the base food may be meat substrate or pastry; the stabiliser composition may be a viscous solution or a gel with a dry matter content of about 0.1% to 5% and the stabiliser composition may comprise: a cellulose gum in an amount of from 5-25 wt.%; modified starch in an amount of from 10-50 wt.%; maltodextrin in an amount of from 10-55 wt.%; polydextrose in an amount of from 0-45 wt.%; at least one protein in an amount of from 0-20 wt.%; at least one hydrocolloid in an amount of from 1-10 wt.%; and may contain other ingredients in an amount of from 0-30 wt.%; and wherein the stabilised food product may further comprise a first crumb layer that is adhered to the stabiliser composition due to the physical properties of the stabiliser composition; and wherein the first crumb layer may be crumbs with a particle size of about 0.1 to about 1mm and the crumbs of the first crumb layer may include a hydrocolloid and wherein the stabilised food product with the crumbs applied thereto may provide a complete covering or shell surround the base food substrate that reduces escape of water vapor or ingress of fat during frying of the stabilised food product.

The invention is further described by means of example but not in any limitative sense.

### Example 1 - Stabiliser Composition

A stabiliser composition was prepared using the following ingredients:-

| Ingredient | % |
|---|---|
| cellulose gum (Methocel A4M) | 15.0 |
| modified starch (Thermflo) | 24.0 |
| maltodextrin | 40.0 |
| xanthan gum | 6.0 |
| egg albumen | 15.0 |
| Total | 100.0 |

### Example 2 - General-Purpose Stabiliser Composition

A composition of the following ingredients was used to form a viscous fluid coating composition

| Ingredient | % |
|---|---|
| methyl cellulose (Methocel A4M) | 15.0 |
| modified starch (Thermflo) | 24.0 |
| egg albumen | 15.0 |
| xanthan gum | 6.0 |
| maltodextrin | 40.0 |
| Total | 100.0 |

In these examples the methylcellulose may be replaced by the same amount of Methocel A15.

The composition was dissolved in water to produce a solution with a concentration suitable to stabilise the particular substrate in use. This general purpose formula may be modified to increase its efficiency in specific substrates. The above formula may be modifiedby addition of citric acid (up to 1%) and ascorbic acid (up to 2%) with the dextrose (component II) being reduced accordingly.

### Example 3 - Preparation of Stabiliser Composition

The dry powder mixture was partially hydrated in a tub and then poured into a bowl chopper. The bowl chopper was then run for two to three minutes until fully hydrated. The mixture can be hydrated directly in the bowl chopper if required. Alternatively, the stabiliser may be hydrated using a high shear mixer fitted witha general purpose head.

### Example 4 - Impregnation of the Substrate with the Stabiliser Composition

A chicken mixture for chicken dippers or nuggets was prepared with the following composition which was prepared as a dry mixture, as an alternative to use of a hydrated stabiliser composition. The stabiliser of Example 1 was used.

| Ingredient | % |
|---|---|
| chicken emulsion | 20.0 |
| skin - 3mm | 18.0 |
| chicken breast - 10mm | 50.0 |
| water | 2.0 |
| rusk | 2.0 |
| stabiliser (Example 1) | 5.0 |
| seasoning | 3.0 |
| Total | 100.0 |

The chicken breast was chilled to -3°C and minced using a 10mm plate. After mincing, the temperature was 0-3°C. Water was added with mixing. A chicken emulsion comprising the following ingredients was added with mixing:

| Ingredient | % |
|---|---|
| chicken skin | 44.0 |
| water | 44.0 |
| soya isolate | 11.0 |
| salt | 1.0 |
| Total | 100.0 |

The stabiliser in accordance to Example 1 was added and mixed thoroughly. Rusk was added with mixing following by seasoning. A dry powder flavouring was preferred. The composition was allowed to dissolve in use in water which was present in the substrate in order to form an aqueous stabiliser solution in situ.

A vacuum was applied to the mixture to consolidate the structure following which the chicken mixture was chilled to -3°C and formed into shaped pieces.

A similar procedure was used for other comminuted meat products. Large particulate cores may be manufactured using a similar method.

### Example 5 - Impregnation of a Chicken Mixture with the Stabiliser Composition

| Ingredient | % |
|---|---|
| chicken breast meat (13mm) | 79.0 |
| salt | 1.0 |
| water | 12.0 |
| stabiliser (Example 1) | 5.0 |
| inuline and seasoning | 3.0 |
| Total | 100.0 |

### Example 6 - Impregnation of a Fish Mixture with a Stabiliser Composition

| Ingredient | % |
|---|---|
| cod fillet blocks (partially thawed) | 85.8 |
| salt | 0.9 |
| water | 4.6 |
| stabiliser (Example 1) | 4.8 |
| fish binder | 3.9 |
| Total | 100 |

### Example 7 - Batter Coating Composition

A batter coating composition was prepared.

The viscosity in the batter mixture was in the range 550 - 650 cP as measured by a number 3 spindle at 60rpm. The batter was found to give a good rate of pickup and a crisp coating after frying.

### Example 8 - Aqueous Coating Composition

The following mixture was prepared:

| Ingredient | % |
|---|---|
| modified starch (Thermflo) | 35.0% |
| thickener (Methocel A4M) | 25.0 |
| xanthan gum | 25.0 |
| egg albumen | 15.0 |
| Total | 100.0 |

The mixture was dissolved in water to form a 1% solution using a CFS ScanBrine mixer with paddle agitation. The solution was left to stand for 24 hours to form a fully hydrated gel or viscous aqueous solution

The aqueous coating was applied to impregnated substrates of Examples 4 to 7 using a tempura-type batter applicator in which the substrate particles were dipped.

A pump is necessary to run the machine but after a short while bubbles form in the solution or gel in the applicator. To prevent this problem, food grade anti-foaming agents can be used. Polydimethylsiloxane is preferred but calcium alginate, methyl ethyl cellulose, methylphenylpolysiloxane or polyethylene glycol can be used.

### Example 9 - Crumb Application

A crumb was prepared as disclosed in WO 2010/001101.

Following application of the aqueous coating as described in Example 8, a fine crumb was applied with a mesh size less than 1mm or such as may be described as a dust, using a CFS CRUMBMASTER® breadcrumb applicator.

The fine crumb coated impregnated substrate was passed through the batter of Example 7 in a tempura batter applicator.

A 2mm crumb was applied in a second CFS CRUMBMASTER® breadcrumb applicator with slight pressure from a roller. Particles were passed through a third CFS CRUMBMASTER® breadcrumb applicator to infill with a 1mm crumb using light pressure from a roller.

### Example 10 - Frying and cooking

The coated substrate of Example 9 was fried in pure, fresh rapeseed oil for 2 minutes approximately at 180-188°C. The frying time can be varied depending upon the weight and size of the particles. After frying, the core temperature was 74-85°C. A small loss of weight was observed due to loss of water from the substrate but this is mostly compensated for by the uptake of oil.

## Claims

1. A stabiliser composition comprising, calculated by weight of dry matter:
| | |
|---|---|
| cellulose gum | 5-25 wt.% |
| modified starch | 10-50 wt.% |
| maltodextrin | 10-55 wt.% |
| polydextrose | 0-45 wt.% |
| protein | 0-20 wt.% |
| hydrocolloid | 1-10 wt.% |
| other ingredients | 0-30 wt.%. |

2. A stabiliser composition as claimed in claim 1, wherein the cellulose gum is selected from the group consisting of; methyl cellulose, hydroxypropyl methyl cellulose, carboxymethyl cellulose and combinations thereof and wherein the stabiliser composition includes polydestrose and the polydextrose is present in an amount up to 45% by weight of dry matter.

3. A stabiliser composition as claims in claim 1 or 2, wherein the modified starch is a hydroxyalkylated starch.

4. A stabiliser composition as claimed in any preceding claim, wherein the maltodextrin has a dextrose equivalent (DE) in the range of 3 to 20.

5. A stabiliser composition as claimed in claim 4, wherein the maltodextrin has a dextrose equivalent (DE) in the range of 10 to 20 and is produced by enzymatic hydrolysis and not using heat.

6. A stabiliser composition as claimed in any preceding claim, wherein the protein is selected from the group consisting of: egg albumen, whey protein, soy protein and combinations thereof.

7. A stabiliser composition as claimed in claim 6; wherein the the proteinaceous component is egg albumen.

8. A stabiliser composition as claimed in any preceding claim, wherein the hydrocolloid is selected from the group consisting of: xanthan gum, carageenan gum, guar gum and mixtures thereof.

9. A stabiliser composition as claimed in any preceding claim, wherein the stabiliser composition comprises 20-55 wt.% maltodextrin, calculated by weight of dry matter.

10. The stabiliser composition as claimed in any preceding claim, wherein the stabiliser composition is an aqueous fluid having a dry matter content of 0.1-10 wt.%; the stabiliser composition includes polydextrose; the combined amount of maltodextrin and polydextrose in the stabiliser composition is about 30% to about 55% by weight of the dry matter composition; and the ratio of maltodextrin to polydextrose is in the range of from about 5:1 to 1:5; and the maltodextrin is a rice maltodextrin.

11. A method of manufacture of a microwave or thermally cookable or reheatable food product;
the method comprising the steps of:
providing a substrate comprising pieces of poultry, fish, red meat, vegetable, fruit and/or dairy food;
impregnating the substrate with a stabiliser composition as claimed in any one of the preceding claims to produce a stabilised substrate;
applying an aqueous coating composition onto the stabilised substrate to produce a coated substrate; and
applying a coating of fine crumb onto the coated substrate to form a crumbed substrate comprising a layer of fine crumb encasing the coated substrate.

12. A method of manufacture of a microwave or thermally cookable or reheatable food product as claimed in claim 11, wherein the substrate is impregnated with the stabiliser composition by applying the stabiliser composition onto the substrate, by immersing the substrate into the stabiliser composition or by injecting the stabiliser composition into the substrate.

13. A method of manufacture of a microwave or thermally cookable or reheatable food product of claim 11 or 12, wherein the method further comprises the steps of pre-frying of the crumbed substrate, optionally after application of one or more further coating layers, and freezing of the pre-fried substrate; wherein the pre-fried substrate is not cryogenically frozen after pre-frying the crumbed substrate; and wherein the stabiliser composition is the stabiliser composition of any one of claims 1 to 10.

14. A stabilised food product comprising:
a base food substrate chosen from the group consisting of a meat substrate; a sauce; a fruit; a vegetable; a fish; and a pastry; and
an aqueous stabiliser composition on an exterior surface of the base food substrate or within the base food substrate; and
wherein the aqueous stabiliser composition includes: from about 5 to 25 wt.% of a cellulose gum; from about 10 to about 50 wt.% of at least one modified starch; from about 10 to about 55 wt.% maltodextrin; polydextrose; a protein; a hydrocolloid where all amounts are calculated by weight of dry matter.

15. The stabilised food product of claim 14, wherein the food substrate has the stabiliser composition on the exterior surface of the base food substrate, the base food is a meat substrate or pastry; the stabiliser composition is a viscous solution or a gel with a dry matter content of about 0.1 % to 5% and the stabiliser composition comprises: a cellulose gum in an amount of from 5-25 wt.%; modified starch in an amount of from 10-50 wt.%; maltodextrin in an amount of from 10-55 wt.%; polydextrose in an amount of from 0-45 wt.%; at least one protein in an amount of from 0-20 wt.%; at least one hydrocolloid in an amount of from 1-10 wt.%; and other ingredients in an amount of from 0-30 wt.%; and wherein the stabilised food product further comprises a first crumb layer that is adhered to the stabiliser composition due to the physical properties of the stabiliser composition; and wherein the first crumb layer is crumbs with a particle size of about 0.1 to about 1mm and the crumbs of the first crumb layer include a hydrocolloid and wherein the stabilised food product with the crumbs applied thereto provide a complete covering or shell surround the base food substrate that reduces escape of water vapor or ingress of fat during frying of the stabilised food product.
